Europäisches Patentamt

European Patent Office

Office européen des brevets

(19)

(11) **EP 0 658 797 B1**

(12) **EUROPEAN PATENT SPECIFICATION**

(45) Date of publication and mention
of the grant of the patent:
**14.11.2001 Bulletin 2001/46**

(51) Int Cl.$^7$: **G03B 5/00**, G03B 17/00

(21) Application number: **94309333.6**

(22) Date of filing: **14.12.1994**

(54) **Image movement correction of camera**

Kamera mit Bildbewegungskompensation

Appareil de prise de vues avec compensation de déplacements d'images

(84) Designated Contracting States:
**DE FR GB**

(30) Priority: **14.12.1993 JP 34263193**

(43) Date of publication of application:
**21.06.1995 Bulletin 1995/25**

(73) Proprietor: **NIKON CORPORATION**
**Tokyo (JP)**

(72) Inventor: **Okazaki, Mitsuhiro**
**Kawasaki-shi, Kanagawa-ken (JP)**

(74) Representative: **Burke, Steven David et al**
**R.G.C. Jenkins & Co.**
**26 Caxton Street**
**London SW1H 0RJ (GB)**

(56) References cited:
• **PATENT ABSTRACTS OF JAPAN vol. 017 no.
166 (P-1514) ,30 March 1993 & JP-A-04 328531
(CANON INC) 17 November 1992, & US-A-5 335
032 (ONUKI ICHIRO ET AL) 2 August 1994**
• **PATENT ABSTRACTS OF JAPAN vol. 015 no.
196 (P-1203) ,21 May 1991 & JP-A-03 046642
(NEC HOME ELECTRON LTD) 27 February 1991,**
• **PATENT ABSTRACTS OF JAPAN vol. 015 no.
102 (E-1043) ,12 March 1991 & JP-A-02 309702
(TOKYO KEIKI CO LTD) 25 December 1990,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

BACKGROUND OF THE INVENTION

Field of the Invention

The present invention relates to an image correcting camera capable of correcting movement of an image due to movement of hands at the time of photographing. In this specification, the term 'image correcting' is synonymous with 'image stabilizing'.

Related Background Art

There are known image correcting cameras which have an image correcting device for correcting movement of an image due to movement of hands at the time of photographing. When a vibration sensor provided in such a camera detects vibrations, the image movement correcting device drives a correcting lens provided in a portion of the photographing lens system to cancel the vibrations thereby to correct movement of an image based on the output of the vibration sensor while the shutter is opened.

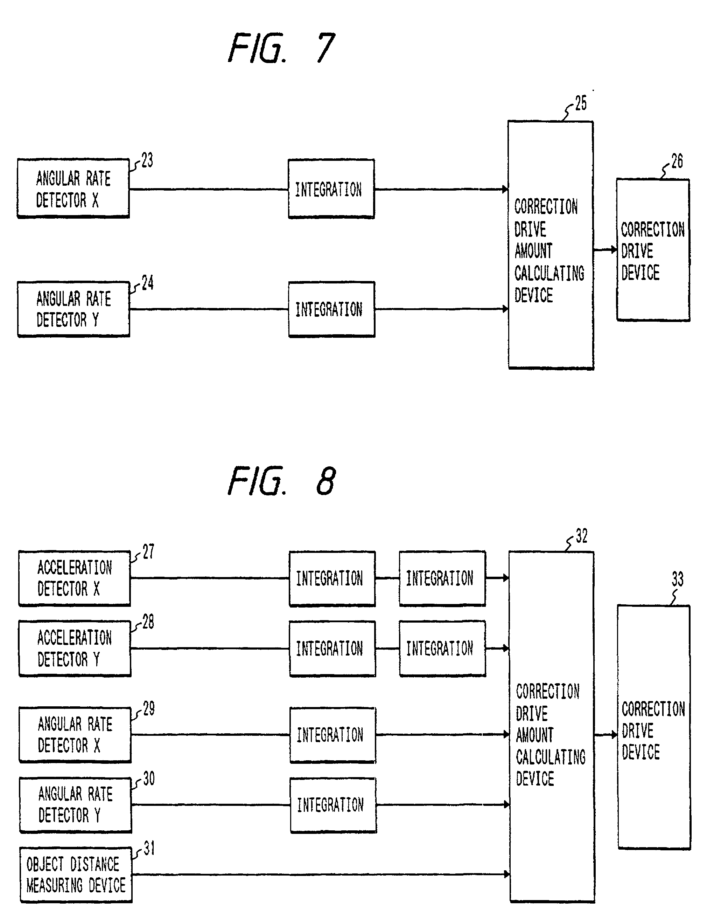

Figs. 7 and 8 are block diagrams showing structures of conventional image correcting cameras capable of correcting movement of an image as disclosed in Japanese Patent Application Laid-Open Nos. 3-37616 and 3-46642 respectively.

The camera in Fig. 7 is provided with angular rate detectors 23, 24, a correction drive amount calculating device 25 and a correction drive device 26.

The angular rate detectors 23, 24 detect angular rates (movements) around X- and Y-axes which are at right angles to the optical axis of the camera.

Based on the displacements (rotation angles) around the X- and Y-axis directions calculated from respective outputs of the angular rate detectors 23, 24, the correction drive amount calculating device 25 calculates an amount of drive of a correcting lens (not shown) so as to cancel the movement of the image.

The correction drive device 26 correct the movement of the image occurring in the camera by driving the correcting lens in accordance with the calculated amount of drive.

The camera in Fig. 8 is provided with acceleration detectors 27, 28, angular rate detectors 29, 30, an object distance measuring device 31, correction drive amount calculating device 32 and a correction drive device 33.

The acceleration detectors 27, 28 detect accelerations in X- and Y-axis directions respectively.

The angular rate detectors 29, 30 detect angular rates around X- and Y-axes respectively.

The object distance measuring device 31 measures the distance between an object and the camera.

Based on a displacement (an amount of movement) in the Y-axis direction calculated from the output of the acceleration detector 28, a displacement (a rotation angle) around the X-axis calculated from the output of the angular rate detector 29, and the output of the object distance measuring device 31, the correction drive amount calculating device 32 calculates an amount of rotation around the X-axis so as to cancel its movement. Similarly, based on a displacement in the X-axis direction calculated from the output of the acceleration detector 27, a displacement around the Y-axis calculated from the output of the angular rate detector 30, and the output of the object distance measuring device 31, the correction drive amount measuring device 32 calculates an amount of rotation around the Y-axis so as to cancel its movement.

In accordance with these calculated amounts, the correction drive device 33 rotates the optical system of the photographing device around the X- and Y-axes to correct the movement of the image in the X- and Y-axis directions.

However, in the above-mentioned cameras, there have been following problems.

In the camera of Fig. 7, since the movements of the camera are detected only by the angular rate detectors 23, 24, movements in translational directions cannot be detected. Therefore, it is impossible to correct the movement of the image produced by the movements in the translational directions. Particularly, when the photographing magnification is high, the movement of the image in translational directions of the camera are large, which causes the image quality to be lowered.

Also, in the camera of Fig. 8, movements in the translational directions of the camera can be detected by the acceleration detectors 27, 28, but since gravitational acceleration components acting on the acceleration detectors 27, 28 due to rotational movements of the camera are changed, the movements in the translational directions cannot be detected properly. Therefore, it is impossible to correct the movement of the image accurately, whereby a clear image cannot be obtained.

JP 4-328531 and JP 4-328533 disclose image stabilizing apparatus having an accelerometer for detecting gravitational acceleration and correction drive control for correcting movement: of an image on the basis of a change of angle of a camera.

SUMMARY OF THE INVENTION

It is desirable to provide an image correcting camera capable of detecting its translational movements accurately and correcting movement of an image properly to obtain the image clearly.

The present invention provides an image correcting camera as set out in claim 1.

The attitude determining device may calculate the initial attitude of the camera with respect to the static coordinate system from a gravitational acceleration direction in the camera coordinate system obtained from the accelerations in the three axial directions.

The present invention also provides an image correcting camera as set out in claim 4.

The coordinate transformation matrix between the camera coordinate system and the static coordinate system is calculated by means of the attitude determining device from the outputs of the acceleration detecting device, the attitude detecting device and the angular rate detecting device. Then, the gravitational acceleration components in the camera coordinate system is calculated by means of the gravitational acceleration component calculating device. When the gravitational acceleration components are eliminated from the outputs of the acceleration detecting device, only the accelerations generated in the translational movements are calculated. Therefore, even though the gravitational acceleration components acting on the acceleration detecting device due to rotational movements is changed, the displacements due to the translational movements can be calculated accurately.

BRIEF DESCRIPTION OF THE DRAWINGS

Fig. 1 is a block diagram showing the structure of an image correcting camera according to a first embodiment of the present invention;
Figs. 2A and 2B each show an example of actual positions of acceleration detectors 1, 2, 3 and angular rate detectors 4, 5, 6 in the camera;
Fig. 3 shows an inertial coordinate system 19 as a static coordinate system and a camera coordinate system 20 as a moving coordinate system;
Figs. 4A and 4B each show movement of an image on a film surface 16;
Fig. 5 is a block diagram showing the structure of an image correcting camera according to a second embodiment of the present invention;
Fig. 6 is a block diagram showing the structure of an image correcting camera according to a third embodiment of the present invention;
Fig. 7 is a block diagram showing the structure of a conventional image correcting camera;
Fig. 8 is a block diagram showing the structure of another conventional image correcting camera; and
Fig. 9 is a schematic diagram showing a correction optical device of the image correcting camera of the present invention.

DETAILED DESCRIPTION OF THE PREFERRED EMBODIMENTS

Embodiments of the present invention will be described with reference to the accompanying drawings.

Fig. 9 schematically shows a correction optical device of an image correcting camera 35 capable of correcting movement of an image. The correction optical device includes a fixed lens 36, a focusing lens 37, an image movement correcting lens 38 and a film surface 16.

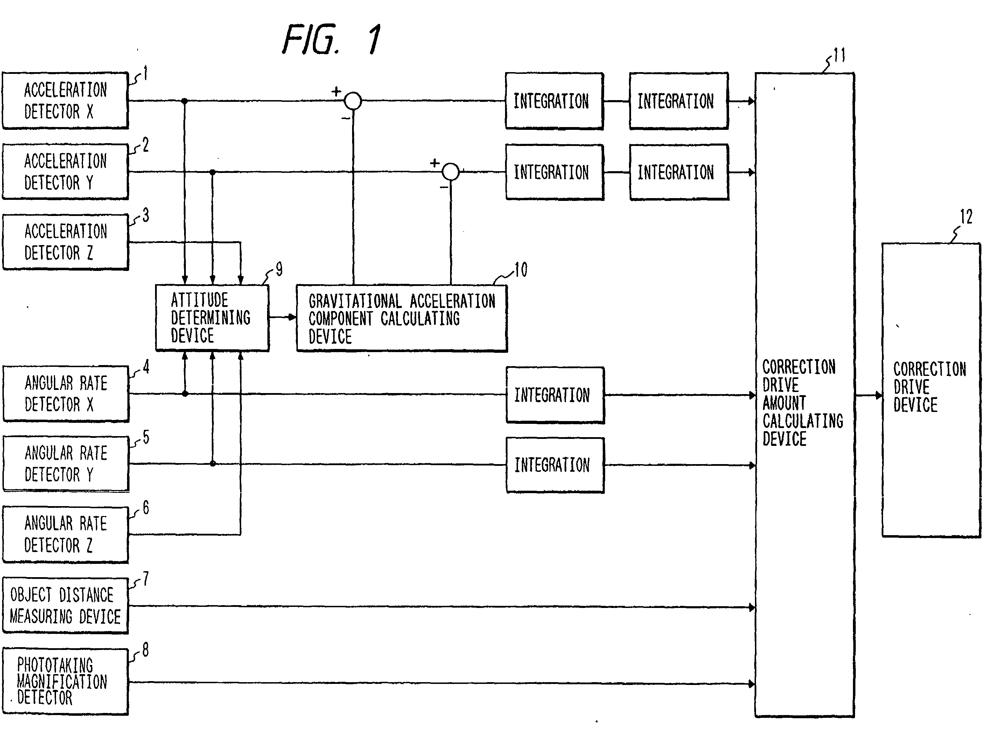

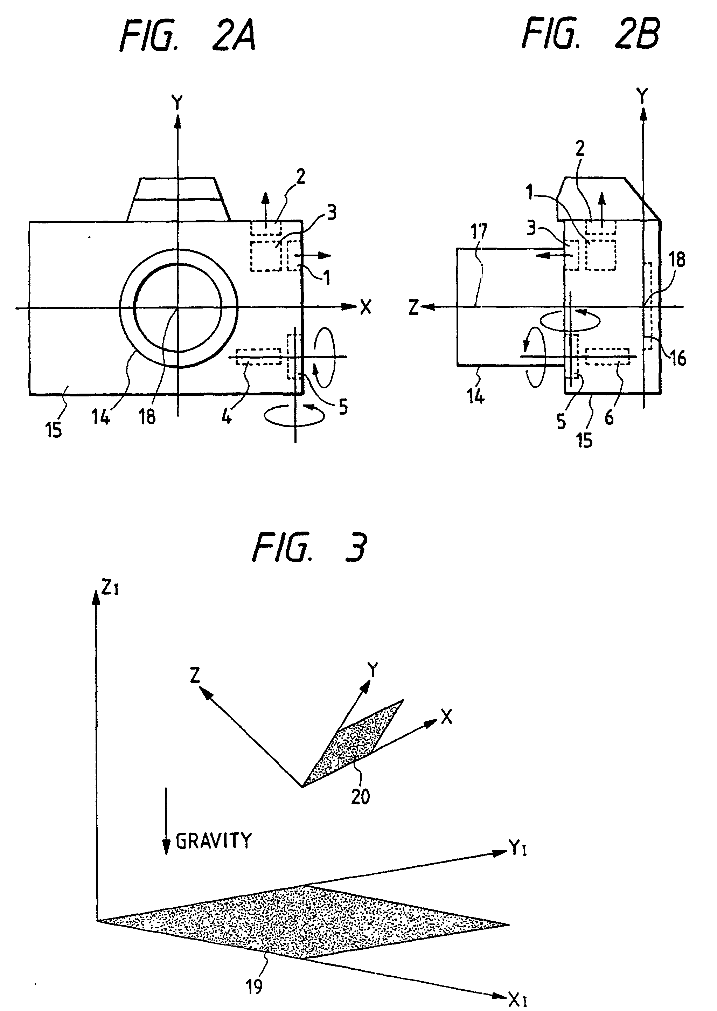

Fig. 1 shows a block diagram showing an image correcting camera according to a first embodiment of the present invention. This image correcting camera has acceleration detectors 1, 2, 3 and angular rate detectors 4, 5, 6. Figs. 2A and 2B show examples of actual positions of the acceleration detectors 1, 2, 3 and the angular rate detectors 4, 5, 6 in the camera. The acceleration detectors 1, 2, 3 and the angular rate detectors 4, 5, 6 are mounted in a main body 15 of the camera to detect accelerations in directions of three axes and the angular rates around the three axes respectively.

In this embodiment, an intersection of the film surface 16 and an optical axis 17 of a camera lens 14 is made an origin 18, the optical axis 17 of the camera lens 14 represents a Z-axis, and the film surface 16 represents an XY-plane.

Output values of the acceleration detectors 1, 2, 3 include accelerations generated in translational movements and gravitational accelerations. Also, since the attitude of the camera is changed due to a rotational movement of the camera, angles formed by directions of detection axes of the acceleration detectors 1, 2, 3 fixed to a camera coordinate system and the gravitational acceleration direction are changed. Therefore, the magnitudes of the gravitational accelerations included in the output values of the acceleration detectors 1, 2, 3 are changed. Accordingly, the gravitational acceleration components are eliminated from the output values of the acceleration detectors 1, 2, 3 and the displacements are calculated only by the acceleration components generated in the translational movements.

In order to calculate the gravitational acceleration components, an attitude determining device 9 and gravitational acceleration component calculating device 10 are provided in the image correcting camera.

The attitude determining device 9 calculates a coordinate transformation matrix T for transforming an inertial coordinate system 19 as a static coordinate system into a camera coordinate system 20 as a moving coordinate system, as shown in Fig. 3. The coordinate transformation matrix T is calculated from the initial attitude of the camera and the accelerations around the three axes obtained from the outputs of the angular rate detectors 4, 5, 6. This calculating method is the same as a method used in a strap-down type inertial navigation system and the detailed description thereof is disclosed in, e.g., Japanese Patent Application Laid-Open No. 2-309702.

First, the initial attitude of the camera is obtained by the use of a gravitational acceleration direction obtained from the outputs of the acceleration detectors 1, 2, 3. Since there are rotational movements and translational movements in the camera, the gravitational acceleration direction is measured for an appropriate period of time and the average of the measurement results is calculated to obtain an average gravitational acceleration direction. Then, from the gravitational acceleration direction in the camera coordinate system, an average attitude of the camera with respect to the inertial coordinate system is obtained to set it as the initial attitude of the camera.

The following equation 1 is a differential equation for calculating the coordinate transformation matrix T. The coordinate transformation matrix T is calculated by obtaining $\Omega_c$ by substituting angular rates $\omega_X$, $\omega_Y$, $\omega_Z$ around the X-, Y- and Z-axes being the outputs of the angular rate detectors 4, 5, 6 into the equation 1 and solving the differential equation with the initial attitude of the camera as an initial condition.

$$[\text{Equation 1}] \qquad \dot{T} = \Omega_c \cdot T.$$

$$\Omega_c = \begin{bmatrix} 0 & \omega_Z & -\omega_Y \\ -\omega_Z & 0 & \omega_X \\ \omega_Y & -\omega_X & 0 \end{bmatrix}$$

The gravitational acceleration component calculating means 10 multiplies each gravitational acceleration component of the inertial coordinate system by the coordinate transformation matrix to obtain gravitational acceleration components in the camera coordinate system. When the respective gravitational acceleration components are removed from the accelerations in the X- and Y-axis directions being the output values of the acceleration detectors 1, 2, accelerations generated in the translational movements can be obtained. The obtained accelerations are integrated to calculate the displacements of the translational movements in the X- and Y-axis directions. On the other hand, the angular rates around the X- and Y-axes being the output values of the angular rate detectors 4, 5 are integrated to calculate rotation angles around the X- and Y-axes.

An object distance measuring device 7 measures the distance between the object and the camera from an amount of shift of the focusing lens at the time of focusing by the use of a lens provided with an encoder.

A photographing magnification detector 8 detects the magnification of the camera at the time of photographing.

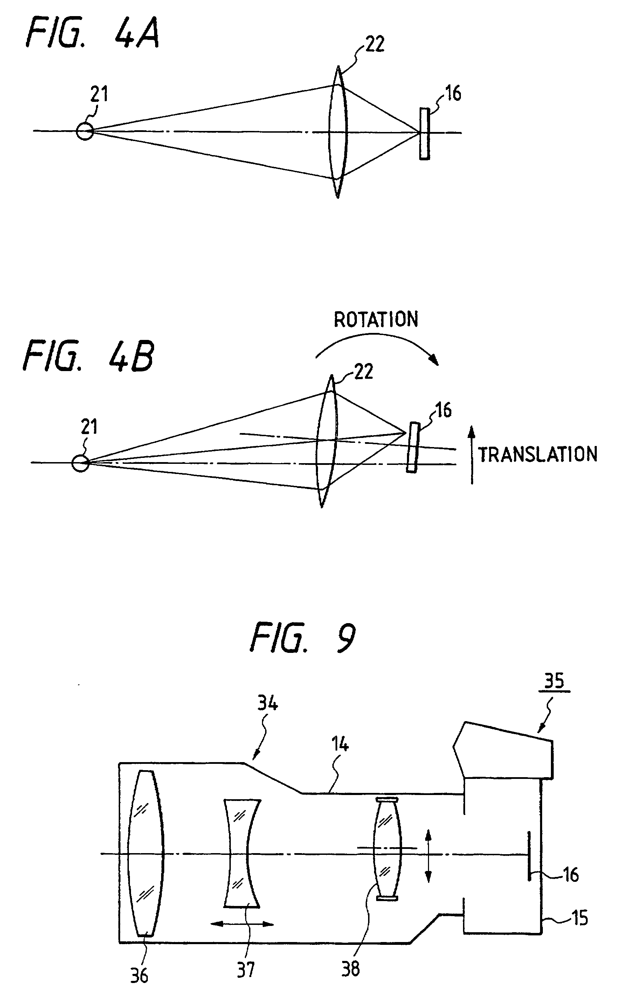

Correction drive amount calculating device 11 calculates an amount of drive of the correcting lens 38 for correcting movement of an image. The correction drive amount calculating device 11 obtains a movement of the camera affecting the movement of the image in accordance with the displacements of the translational movements in the X- and Y-axis directions and the rotation angles around the X- and Y-axes calculated as above. Further, in Figs. 4A and 4B showing an object 21, a lens 22 and the film surface 16, an amount of two-dimensional movement of the image on the film surface 16 is obtained from the distance between the object 21 and the camera and the photographing magnification. Next, by the use of these signals, a signal for driving the correcting lens 38 to cancel the movement of the image is calculated.

A correction drive device 12 drives the correcting lens 38 in accordance with this signal. As the correction drive device 12, there is a known correction drive device as disclosed in, e.g., Japanese Patent Application Laid-Open No. 5-158100.

As above, the correcting lens 38 is driven by the signals obtained by eliminating the gravitational acceleration components from the output values of the acceleration detectors 1, 2, so that the movement of the image can be corrected with no influence of the gravitational acceleration components, making it possible to obtain a clear image.

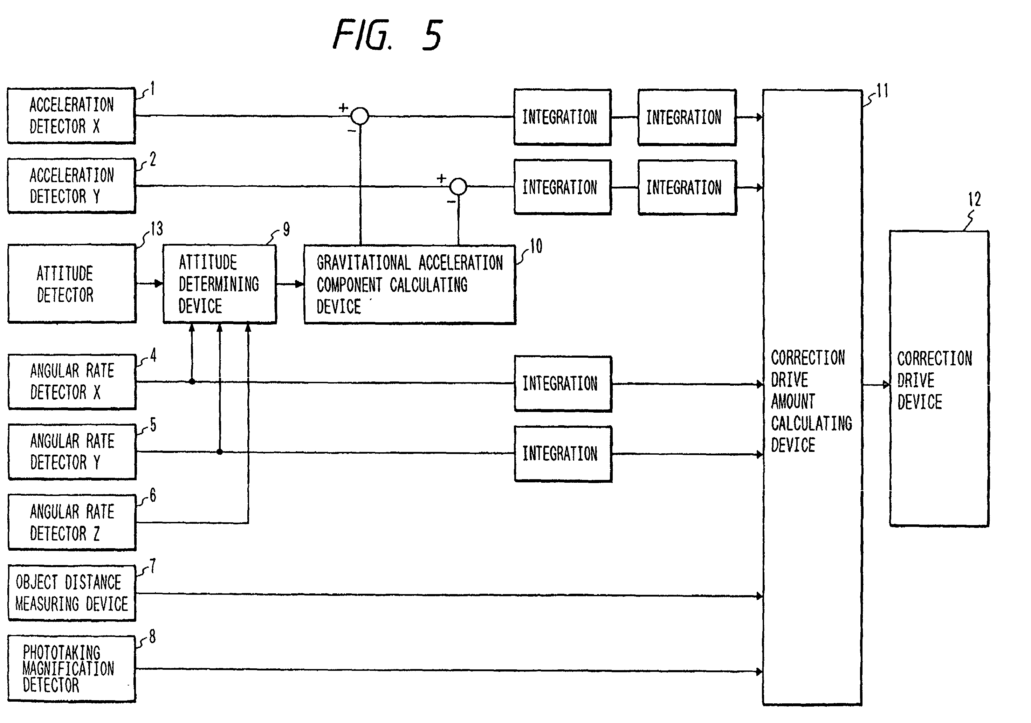

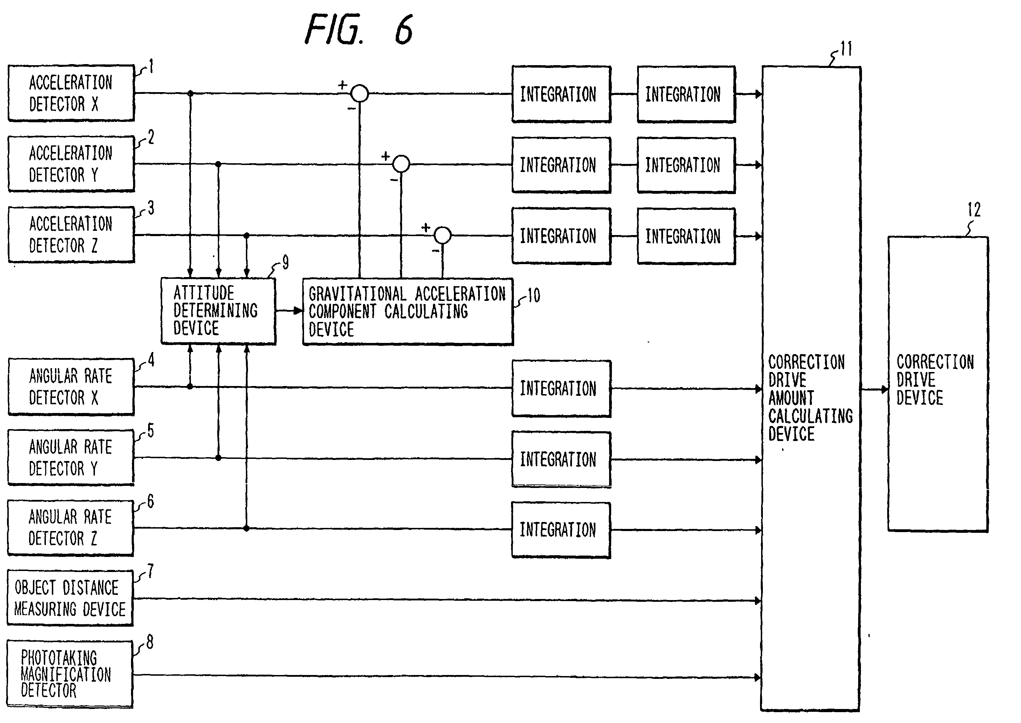

Figs. 5 and 6 show the structures of image correcting cameras according to second and third embodiments of the present invention respectively. Respective elements identical to those in Fig. 1 are designated by the identical reference numerals and the structures different from those in the first embodiment will be described.

In the camera in Fig. 5, an attitude detector 13 is provided instead of the acceleration detector 3. The attitude detector 13 detects the gravitational acceleration direction to detect the attitude of the camera. Therefore, the attitude determining means 9 calculates the coordinate transformation matrix T by the use of the outputs from the attitude detector 13 and the angular rate detectors 4, 5, 6.

If the acceleration detectors 1, 2, 3 are a piezoelectric type which cannot detect static acceleration, the gravitational acceleration direction cannot be detected by the acceleration detectors 1, 2, 3, so that it is necessary to utilize the attitude detector 13 in Fig. 5. In this case, it is not necessary to provide the acceleration detector 3 for detecting the acceleration in the Z-axis direction.

Also, in the camera of Fig. 1, the amount of two-dimensional movement of the image on the film surface 16 is obtained and corrected from the displacements of the translational movements in the X- and Y-directions and the rotation angles around the X- and Y-axes. However, in the camera of Fig. 6, the displacement of the translational movement in the Z-axis direction and the rotation angle around the Z-axis are included further to obtain and correct an amount of three-dimensional movement of the image.

Therefore, gravitational acceleration components calculated by the gravitational acceleration component calculating means 10 are eliminated from the acceleration in the Z-axis direction being the output value of the acceleration detector 3 and the obtained value is integrated to calculate the displacement of the translational movement in the Z-axis direction. The calculated displacement is sent to the correction drive amount calculating device 11.

Also, the angular rate around the Z-axis being the output value of the angular rate detector 6 is integrated to calculate a rotation angle around the Z-axis. The calculated rotation angle is sent to the correction drive amount calculating device 11.

At this time, in order to correct a focal shift due to the displacement of the translational movement in the Z-axis direction, for example, a focusing lens to be used in automatic focusing may be driven. Also, in order to correct the movement of the image due to the rotational movement around the Z-axis, for example, an image pick-up surface may be rotated or an image rotator may be utilized.

Although the embodiments of the present invention have been described above, the present invention is not limited to the above embodiments and it will be understood that various changes and modifications may be made without departing from the scope of the invention.

For example, the acceleration detectors 1, 2, 3 and the angular rate detectors 4, 5, 6 are mounted inside the main body 15, but may be mounted in the camera lens 14. Also, instead of the acceleration detectors 1, 2, 3, a three-dimensional acceleration detector may be utilized to detect the accelerations in the three axial directions.

In the above embodiments, the movement of the image is corrected by driving the correcting lens, but may be corrected by driving the film. Also, in the case of a video camera, a correcting lens or an image pick-up device may be driven.

Also, although in the camera of Fig. 1, or Fig. 6, the attitude determining device 9 obtains the initial attitude of the camera by the use of the gravitational acceleration direction in the camera coordinate system obtained from the outputs of the acceleration detectors 1, 2, 3, the initial attitude of the camera may be obtained in another way. For example, the camera is first disposed in a certain attitude (a horizontal attitude, a vertical attitude, etc.) and is made to recognize this attitude as the initial attitude of the camera by depressing a button or the like.

According to the cameras of the present invention, the movement of the image is corrected by calculating the displacements of the translational movements excluding gravitational acceleration components. Therefore, even though the gravitational acceleration components acting on the acceleration detectors are changed due to rotational movements, the movement of the image can be corrected properly, making it possible to attain a clear image.

**Claims**

1. An image stabilizing camera comprising:

    an acceleration detecting device (1,2,3) for detecting accelerations in three directions of X-, Y- and Z-axes acting on said camera;
    an angular rate detecting device (4,5,6) for detecting angular rates around said three axes acting on said camera;
    an attitude determining device (9) for calculating a coordinate transformation matrix between a camera coordinate system and a static coordinate system from an initial attitude of said camera with respect to said static coordinate system and said angular rates around said three axes;
    a gravitational acceleration component calculating device (10) for calculating gravitational acceleration components in said camera coordinate system by the use of said coordinate transformation matrix;
    an object distance measuring device (7) for measuring the distance between said camera and an object;
    a photographing magnification detector (8) for detecting a photographing magnification of said camera;
    a correction drive amount calculating device (11) for calculating an amount of movement of an image based on respective displacements in the X- and Y-axis directions or the three axial directions calculated by eliminating said gravitational acceleration components from said respective accelerations in the X- and Y-axis directions or the three axial directions, respective rotation angles around the X- and Y-axes or the three axes calculated from said respective angular rates around the X- and Y-axes or the three axes, the distance between said camera and said object, and said photographing magnification, and calculating an amount of drive of a correcting lens and/or an image pick-up surface so as to cancel said amount of movement of said image; and
    a correction drive device (12) for driving said correcting lens and/or said image pick-up surface.

2. An image stabilizing camera according to claim 1, wherein the acceleration detecting device (1,2,3) includes a plurality of acceleration detecting devices for detecting respective accelerations in three directions of X-, Y- and Z-axis acting on said camera; and
    the angular rate detecting device (4,5,6) includes a plurality of angular detecting devices for detecting respective angular rates around said three axes acting on said camera.

3. An image stabilizing camera according to claim 2, wherein said attitude determining device (9) calculates said initial attitude of said camera with respect to said static coordinate system from a gravitational acceleration direction in said camera coordinate system obtained from said accelerations in the three axial directions.

4. An image stabilizing camera comprising:

angular rate detecting devices (1,2,3) for detecting respective angular rates around X-, Y- and Z-axes acting on said camera;
acceleration detecting devices (4,5,6) for detecting respective accelerations in said X- and Y-axis directions acting on said camera;
an attitude detector (13) for detecting an initial attitude of said camera by detecting a gravitational acceleration direction;
an attitude determining device (9) for calculating a coordinate transformation matrix between a camera coordinate system and a static coordinate system from said initial attitude of said camera and said angular rates around said three axes;
a gravitational acceleration component calculating device (10) for calculating gravitational acceleration components in said camera coordinate system by the use of said coordinate transformation matrix;
an object distance measuring device (7) for measuring the distance between said camera and an object;
a photographing magnification detector (8) for detecting a photographing magnification of said camera;
a correction drive amount calculating device (11) for calculating an amount of movement of an image based on respective displacements in the X- and Y-axis directions calculated by eliminating said gravitational acceleration components from said respective accelerations in the X- and Y-axis directions, respective rotation angles around the X- and Y-axes calculated from said respective angular rates around the X- and Y-axes, the distance between said camera and said object, and said photographing magnification, and calculating an amount of drive of a correcting lens and/or an image pick-up surface so as to cancel said amount of movement of said image; and
a correction drive device (12) for driving said correcting lens and/or said image pick-up surface.

5. An image stabilizing camera comprising:

acceleration detecting devices (1,2,3) for detecting respective accelerations in three directions of X-, Y-and Z-axes acting on said camera;
angular rate detecting devices (4,5,6) for detecting respective angular rates around said three axes acting on said camera;
an attitude determining device (9) for calculating a coordinate transformation matrix between a camera coordinate system and a static coordinate system from an initial attitude of said camera with respect to said static coordinate system and said angular rates around said three axes;
a gravitational acceleration component calculating device (10) for calculating gravitational acceleration components in said camera coordinate system by the use of said coordinate transformation matrix;
an object distance measuring device (7) for measuring the distance between said camera and an object;
a photographing magnification detector (8) for detecting a photographing magnification of said camera;
a correction drive amount calculating device (11) for calculating an amount of movement of an image and an amount of focal shift based on respective displacements in the three axial directions calculated by eliminating said gravitational acceleration components from said respective accelerations in the three axial directions, respective rotation angles around the three axes calculated from said respective angular rates around the three axes, the distance between said camera and said object, and said photographing magnification, calculating an amount of drive of a correcting lens and/or an image pick-up surface so as to cancel said amount of movement of said image, and calculating an amount of drive of a focusing lens and/or said image pick-up surface so as to cancel said amount of focal shift; and
a correction drive device (12) for driving said correcting lens and/or said focusing lens and/or said image pick-up surface.

6. An image stabilizing camera according to claim 5, wherein said attitude determining device (9) calculates said initial attitude of said camera with respect to said static coordinate system from a gravitational acceleration direction in said camera coordinate system obtained from said accelerations in the three axial directions.

7. An image stabilizing camera comprising:

an acceleration detecting device (1,2,3) for detecting acceleration acting on said camera in three directions;

an angular rate detecting device (4,5,6) for detecting a plurality of angular rates acting on said camera around said three axes;

an attitude determining device (9) for calculating a coordinate transformation matrix between a camera coordinate system and a static coordinate system from said angular rates and from said accelerations;

a gravitational acceleration component calculating device (10) for calculating gravitational acceleration components in said camera coordinate system by the use of said coordinate transformation matrix;

a correction drive amount calculating device (11) for calculating acceleration components by eliminating said gravitational acceleration components from said acceleration, and calculating an amount of movement of an image and an amount of correction for said movement of said image based on a displacement calculated from said acceleration components and a rotation angle calculated from said angular rates; and

an image movement correcting device (12) for correcting said movement of said image based on said amount of correction.

8. A method of stabilizing an image in a camera, comprising:

the acceleration detecting step of detecting respective accelerations in three directions of X-, Y- and Z-axes acting on said camera;

the angular rate detecting step of detecting respective angular rates around said three axes acting on said camera;

the attitude determining step of calculating a coordinate transformation matrix between a camera coordinate system and a static coordinate system from an initial attitude of said camera with respect to said static coordinate system and said angular rates around said three axes;

the gravitational acceleration component calculating step of calculating gravitational acceleration components in said camera coordinate system by the use of said coordinate transformation matrix;

the correction drive amount calculating step of calculating an amount of movement of an image based on respective displacements in the X- and Y-axis directions or the three axial directions calculated by eliminating said gravitational acceleration components from said respective accelerations in the X- and Y-axis directions or the three axial directions, respective rotation angles around the X- and Y-axes or the three axes calculated from said respective angular rates around the X- and Y-axes or the three axes, the distance between said camera and an object, and a photographing magnification of said camera, and calculating an amount of drive of a correcting lens and/or an image pick-up surface so as to cancel said amount of movement of said image; and

the correction drive step of driving said correcting lens and/or said image pick-up surface.

**Patentansprüche**

1. Kamera mit Bildbewegungskompensation, die umfasst:

- eine Beschleunigungserkennungsvorrichtung (1, 2, 3) für die Erkennung der Beschleunigung in drei Richtungen der x-, y- und z-Achse, die auf die Kamera wirkt;

- eine Winkelgeschwindigkeitserkennungsvorrichtung (4, 5, 6) für die Erkennung der Winkelgeschwindigkeit um die drei Achsen, die auf die Kamera wirkt;

- eine Lagebestimmungsvorrichtung (9) für die Berechnung einer Koordinatentransformationsmatrix zwischen einem Kamerakoordinatensystem und einem statischen Koordinatensystem von einer ursprünglichen Lage der Kamera hinsichtlich des statischen Koordinatensystems und der Winkelgeschwindigkeit um die drei Achsen;

- eine Schwerkraft-Beschleunigungskomponentenberechnungsvorrichtung (10) für die Berechnung der Schwerkraft-Beschleunigungskomponenten in dem Kamerakoordinatensystem unter Verwendung der Koordinatentransformationsmatrix;

- eine Objektabstandsmeßvorrichtung (7) für die Messung des Abstands zwischen der Kamera und einem Objekt;

- einen Fotografiervergrößerungsdetektor (8) für die Erkennung einer Fotografiervergrößerung der Kamera;

- eine Korrekturantriebsbetragsberechnungsvorrichtung (11) für die Berechnung des Betrags der Bewegung eines Bildes auf der Basis der jeweiligen Versetzungen in der x- und der y-Achsrichtung oder der drei axialen Richtungen, die berechnet werden durch Entfernen der Schwerkraft-Beschleunigungskomponenten von den jeweiligen Beschleunigungen in den x- und y-Achsrichtungen oder den drei Achsrichtungen, der jeweiligen Drehwinkel um die x- und die y-Achse oder die drei Achsen, welche aus den jeweiligen Winkelgeschwindigkeiten um die x- und die y-Achse oder die drei Achsen berechnet werden, des Abstands zwischen der Kamera und dem Objekt, und der fotografischen Vergrößerung, und für die Berechnung eines Antriebsbetrags einer Korrekturlinse und/ oder einer Bildaufnahmeoberfläche, um so den Betrag der Bewegung des Bildes zu kompensieren; und

- einer Korrekturantriebsvorrichtung (12) für den Antrieb der Korrekturlinse und/ oder der Bildaufnahmeoberfläche.

2. Kamera mit Bildbewegungskompensation nach Anspruch 1, wobei die Beschleunigungserkennungsvorrichtung (1, 2, 3) eine Vielzahl von Beschleunigungserkennungsvorrichtungen enthält für die Erkennung der jeweiligen Beschleunigungen in drei Richtungen der x-, der y- und der z-Achse, die auf die Kamera wirken; und
die Winkelgeschwindigkeitserkennungsvorrichtung (4, 5, 6) eine Vielzahl von Winkelgeschwindigkeitserkennungsvorrichtungen enthält für die Erkennung der jeweiligen Winkelgeschwindigkeiten um die drei Achsen, die auf die Kamera wirken.

3. Kamera mit Bildbewegungskompensation nach Anspruch 2, wobei die Lagebestimmungsvorrichtung (9) die ursprüngliche Lage der Kamera hinsichtlich des statischen Koordinatensystems von einer Schwerkraft-Beschleunigungsrichtung in dem Kamerakoordinatensystem berechnet, die aus den Beschleunigungen in den drei Achsrichtungen ermittelt wurde.

4. Kamera mit Bildbewegungskompensation, die umfasst:

- eine Beschleunigungserkennungsvorrichtung (1, 2, 3) für die Erkennung der jeweiligen Beschleunigung in der x- und der y-Achsrichtung, die auf die Kamera wirkt;

- eine Winkelgeschwindigkeitserkennungsvorrichtung (4, 5, 6) für die Erkennung der jeweiligen Winkelgeschwindigkeit um die x-, y- und z-Achse, die auf die Kamera wirkt;

- einen Lagedetektor (13) für die Erkennung einer ursprünglichen Lage der Kamera durch Erkennen einer Schwerkraft-Beschleunigungsrichtung;

- eine Lagebestimmungsvorrichtung (9) für die Berechnung einer Koordinatentransformationsmatrix zwischen einem Kamerakoordinatensystem und einem statischen Koordinatensystem von einer ursprünglichen Lage der Kamera hinsichtlich des statischen Koordinatensystems und der Winkelgeschwindigkeit um die drei Achsen;

- eine Schwerkraft-Beschleunigungskomponentenberechnungsvorrichtung (10) für die Berechnung der Schwerkraft-Beschleunigungskomponenten in dem Kamerakoordinatensystem unter Verwendung der Koordinatentransformationsmatrix;

- eine Objektabstandsmeßvorrichtung (7) für die Messung des Abstands zwischen der Kamera und einem Objekt;

- einen Fotografiervergrößerungsdetektor (8) für die Erkennung einer Fotografiervergrößerung der Kamera;

- eine Korrekturantriebsbetragsberechnungsvorrichtung (11) für die Berechnung des Betrags der Bewegung eines Bildes auf der Basis der jeweiligen Versetzungen in der x- und der y-Achsrichtung oder der drei axialen Richtungen, die berechnet werden durch Entfernen der Schwerkraft-Beschleunigungskomponenten von den jeweiligen Beschleunigungen in den x- und y-Achsrichtungen oder den drei Achsrichtungen, der jeweiligen Drehwinkel um die x- und die y-Achse oder die drei Achsen, welche aus den jeweiligen Winkelgeschwindigkeiten um die x- und die y-Achse oder die drei Achsen berechnet werden, des Abstands zwischen der Kamera und dem Objekt, und der fotografischen Vergrößerung, und für die Berechnung eines Antriebsbetrags einer Korrekturlinse und/ oder einer Bildaufnahmeoberfläche, um so den Betrag der Bewegung des Bildes zu kompensieren; und

- einer Korrekturantriebsvorrichtung (12) für den Antrieb der Korrekturlinse und/ oder der Bildaufnahmeoberfläche.

5. Kamera mit Bildbewegungskompensation, die umfasst:

- eine Beschleunigungserkennungsvorrichtung (1, 2, 3) für die Erkennung der Beschleunigung in drei Richtungen der x-, y- und z-Achse, die auf die Kamera wirkt;

- eine Winkelgeschwindigkeitserkennungsvorrichtung (4, 5, 6) für die Erkennung der Winkelgeschwindigkeit um die drei Achsen, die auf die Kamera wirkt;

- eine Lagebestimmungsvorrichtung (9) für die Berechnung einer Koordinatentransformationsmatrix zwischen einem Kamerakoordinatensystem und einem statischen Koordinatensystem von einer ursprünglichen Lage der Kamera hinsichtlich des statischen Koordinatensystems und der Winkelgeschwindigkeit um die drei Achsen;

- eine Schwerkraft-Beschleunigungskomponentenberechnungsvorrichtung (10) für die Berechnung der Schwerkraft-Beschleunigungskomponenten in dem Kamerakoordinatensystem unter Verwendung der Koordinatentransformationsmatrix;

- eine Objektabstandsmeßvorrichtung (7) für die Messung des Abstands zwischen der Kamera und einem Objekt;

- einen Fotografiervergrößerungsdetektor (8) für die Erkennung einer Fotografiervergrößerung der Kamera;

- eine Korrekturantriebsbetragsberechnungsvorrichtung (11) für die Berechnung des Betrags der Bewegung eines Bildes auf der Basis der jeweiligen Versetzungen in den drei axialen Richtungen, die berechnet werden durch Entfernen der Schwerkraft-Beschleunigungskomponenten von den jeweiligen Beschleunigungen in den drei axialen Richtungen, der jeweiligen Drehwinkel um die drei Achsen, welche aus den jeweiligen Winkelgeschwindigkeiten um die drei Achsen berechnet werden, des Abstands zwischen der Kamera und dem Objekt, und der fotografischen Vergrößerung, für die Berechnung eines Antriebsbetrags einer Korrekturlinse und/oder einer Bildaufnahmeoberfläche, um so den Betrag der Bewegung des Bildes zu kompensieren, und für die Berechnung eines Antriebsbetrags einer Fokussierungslinse und/oder der Bildaufnahmeoberfläche, um so den Betrag der Fokusverschiebung zu kompensieren; und

- einer Korrekturantriebsvorrichtung (12) für den Antrieb der Korrekturlinse und/ oder der Fokussierungslinse und/oder der Bildaufnahmeoberfläche.

6. Kamera mit Bildbewegungskompensation nach Anspruch 5, wobei die Lagebestimmungsvorrichtung (9) die ursprüngliche Lage der Kamera hinsichtlich des statischen Koordinatensystems von einer Schwerkraft-Beschleunigungsrichtung in dem Kamerakoordinatensystem berechnet, die aus den Beschleunigungen in den drei Achsrichtungen ermittelt wurde.

7. Kamera mit Bildbewegungskompensation die umfasst:

- eine Beschleunigungserkennungsvorrichtung (1, 2, 3) für die Erkennung der auf die Kamera wirkenden Beschleunigung in drei Richtungen;

- eine Winkelgeschwindigkeitserkennungsvorrichtung (4, 5, 6) für die Erkennung der auf die Kamera wirkenden Winkelgeschwindigkeit um die drei Achsen;

- eine Lagebestimmungsvorrichtung (9) für die Berechnung einer Koordinatentransformationsmatrix zwischen einem Kamerakoordinatensystem und einem statischen Koordinatensystem von den Winkelgeschwindigkeiten und den Beschleunigungen;

- eine Schwerkraft-Beschleunigungskomponentenberechnungsvorrichtung (10) für die Berechnung der Schwerkraft-Beschleunigungskomponenten in dem Kamerakoordinatensystem unter Verwendung der Koordinatentransformationsmatrix;

- eine Korrekturantriebsbetragsberechnungsvorrichtung (11) für die Berechnung der Beschleunigungskomponenten durch Entfernen der Schwerkraft-Beschleunigungskomponenten von der Beschleunigung und für die Berechnung eines Betrags der Bewegung eines Bilds auf der Basis einer Versetzung, die berechnet wird aus den Beschleunigungskomponenten und einem Drehwinkel, der aus den Winkelgeschwindigkeiten berechnet wird; und

- einer Bildbewegungskorrekturvorrichtung (12) für die Korrektur der Bewegung des Bilds auf der Basis des Betrags der Korrektur.

8. Verfahren für die Bildbewegungskompensation in einer Kamera, das umfasst:

- den Beschleunigungserkennungsschritt der Erkennung der jeweiligen Beschleunigungen in drei Richtungen der x-, y- und z-Achse, die auf die Kamera wirken;

- den Winkelgeschwindigkeitserkennungsschritt der Erkennung der jeweiligen Winkelgeschwindigkeiten um die drei Achsen, die auf die Kamera wirken;

- eine Lagebestimmungsschritt der Berechnung einer Koordinatentransformationsmatrix zwischen einem Kamerakoordinatensystem und einem statischen Koordinatensystem von einer ursprünglichen Lage der Kamera hinsichtlich des statischen Koordinatensystems und der Winkelgeschwindigkeit um die drei Achsen;

- den Schwerkraft-Beschleunigungskomponentenberechnungsschritt der Berechnung der Schwerkraft-Beschleunigungskomponenten in dem Kamerakoordinatensystem unter Verwendung der Koordinatentransformationsmatrix;

- den Korrekturantriebsbetragsberechnungsschritt der Berechnung eines Betrags der Bewegung eines Bildes auf der Basis der jeweiligen Versetzungen in der x-und der y-Achse oder den drei axialen Richtungen, die berechnet werden durch Entfernen der Schwerkraft-Beschleunigungskomponenten von den jeweiligen Beschleunigungen in der x- und der y-Achsrichtung oder den drei axialen Richtungen, der jeweiligen Drehwinkel um die x- und die y-Achse oder die drei Achsen, welche aus den jeweiligen Winkelgeschwindigkeiten um die x- und die y-Achse oder die drei Achsen berechnet werden, des Abstands zwischen der Kamera und dem Objekt, und der fotografischen Vergrößerung, und für die Berechnung eines Antriebsbetrags einer Korrekturlinse und/ oder einer Bildaufnahmeoberfläche, um so den Betrag der Bewegung des Bildes zu kompensieren; und

- den Korrekturantriebsschritt des Antriebs der Korrekturlinse und/oder der Bildaufnahmeoberfläche.

## Revendications

1. Appareil de prise de vues à stabilisation d'image, comprenant :

   un dispositif de détection d'accélérations (1,2,3) pour détecter des accélérations dans trois directions d'axes X, Y et Z, agissant sur ledit appareil de prise de vues;
   un dispositif (4,5,6) de détection de vitesses angulaires pour détecter les vitesses angulaires autour desdits trois axes, agissant sur ledit appareil de prise de vues;
   un dispositif de détermination d'attitude (9) pour calculer une matrice de transformation de coordonnées entre un système de coordonnées de l'appareil de prise de vues et un système de coordonnées statique à partir d'une attitude initiale dudit appareil de prise de vues par rapport audit système de coordonnées statiques, et desdites vitesses angulaires autour desdits trois axes;
   un dispositif (10) de calcul de composantes d'accélération de la pesanteur pour calculer des composantes d'accélération de la pesanteur dans ledit système de coordonnées de l'appareil de prise de vues moyennant l'utilisation de ladite matrice de transformation de coordonnées;
   un dispositif (7) de mesure de la distance d'un objet pour mesurer la distance entre ledit appareil de prise de vues et un objet;
   un détecteur (8) du grandissement photographique pour détecter un grandissement photographique dudit appareil de prise de vues;
   un dispositif (11) de calcul de la quantité d'entraînement de correction pour calculer une quantité de déplacements d'une image sur la base de déplacements respectifs dans les directions des axes X et Y ou les trois directions axiales calculées par élimination desdites composantes de l'accélération de la pesanteur desdites accélérations respectives suivant les directions des axes X et Y ou les trois directions axiales, d'angles de rotation respectifs autour des axes X et Y ou autour des trois axes calculés à partir desdites vitesses angulaires respectives autour des axes X et Y ou autour des trois axes, de la distance entre ledit appareil de prise de vues et ledit objet, et ledit grandissement photographique, et calcul d'une quantité d'entraînement d'une lentille de correction et/ou d'une surface de détection d'images pour annuler ladite valeur de déplacement de ladite image; et
   un dispositif d'entraînement de correction (12) pour entraîner ladite lentille de correction et/ou ladite surface de détection d'images.

2. Appareil de prise de vues à stabilisation d'images selon la revendication 1, dans lequel le dispositif de détection d'accélérations (1,2,3) comprend une pluralité de dispositifs de détection d'accélérations pour détecter des accélérations respectives dans les trois directions d'axes X, Y et Z, agissant sur ledit appareil de prise de vues; et
   le dispositif (4,5,6) de détection de vitesse angulaires inclut une pluralité de dispositifs de détection angulaire pour détecter des vitesses angulaires respectives autour desdits trois axes, agissant sur ledit appareil de prise de vues.

3. Appareil de prise de vues à stabilisation d'images selon la revendication 2, dans lequel le dispositif de détermination d'attitude (9) calcule ladite attitude initiale dudit appareil de prise de vues par rapport audit système de coordonnées statique à partir d'une direction d'accélération de la pesanteur dans ledit système de coordonnées de l'appareil de prise de vues, obtenu à partir desdites accélérations dans les trois directions axiales.

4. Appareil de prise de vues à stabilisation d'images comprenant :

    des dispositifs (1,2,3) pour détecter des vitesses angulaires respectives autour d'axes X, Y et Z et agissant sur ledit appareil de prise de vues;

    des dispositifs de détection d'accélération (4,5, 6) pour détecter des accélérations respectives dans lesdites directions des axes X et Y, agissant sur ledit appareil de prise de vues;

    un détecteur d'attitude (13) pour détecter une attitude initiale dudit appareil de prise de vues par détection d'une direction d'accélération de la pesanteur;

    un dispositif (9) de détermination d'attitude pour calculer une matrice de transformation de coordonnées entre un système de coordonnées de l'appareil de prise de vues et un système de coordonnées statique à partir de ladite attitude initiale dudit appareil de prise de vues et desdites vitesses angulaires autour desdits trois axes;

    un dispositif (10) de calcul de composantes de l'accélération de la pesanteur pour calculer des composantes de l'accélération de la pesanteur dans ledit système de coordonnées de l'appareil de prise de vues, moyennant l'utilisation de ladite matrice de transformation de coordonnées;

    un dispositif (7) de mesure de la distance d'un objet pour mesurer la distance entre ledit appareil de prise de vues et un objet;

    un détecteur (8) du grandissement photographique pour détecter un grandissement photographique dudit appareil de prise de vues;

    un dispositif (11) de calcul de la quantité d'entraînement de correction pour calculer une quantité de déplacement d'une image sur la base de déplacements respectifs dans la direction des axes X et Y, calculés par élimination desdites composantes d'accélération de la pesanteur dans lesdites accélérations respectives suivant les directions des axes X et Y, d'angles de rotation respectifs autour des axes X et Y calculés à partir desdites vitesses angulaires respectives autour des axes X et Y, de la distance entre ledit appareil de prise de vues et ledit objet, et dudit grandissement photographique, et le calcul d'une quantité d'entraînement d'une lentille de correction et/ou d'une surface de détection d'images de manière à annuler lesdites quantités de déplacement de ladite image; et

un dispositif d'entraînement de correction (12) pour entraîner ladite lentille de correction et/ou ladite surface de détection d'images.

5. Appareil de prise de vues à stabilisation d'images comprenant :

    des dispositifs de détection d'accélérations (1,2,3) pour détecter des accélérations dans trois directions d'axes X, Y et Z, agissant sur ledit appareil de prise de vues;

    des dispositifs (4,5,6) de détection de vitesses angulaires pour détecter les vitesses angulaires autour desdits trois axes, agissant sur ledit appareil de prise de vues;

    un dispositif de détermination d'attitude (9) pour calculer une matrice de transformation de coordonnées entre un système de coordonnées de l'appareil de prise de vues et un système de coordonnées statique à partir d'une attitude initiale dudit appareil de prise de vues par rapport audit système de coordonnées statique, et à partir lesdites vitesses angulaires autour desdits trois axes;

    un dispositif (10) de calcul de composantes d'accélération de la pesanteur pour calculer des composantes de l'accélération de la pesanteur dans ledit système de coordonnées de l'appareil de prise de vues moyennant l'utilisation de ladite matrice de transformation de coordonnées; et

    un dispositif (7) de mesure de la distance d'un objet pour mesurer la distance entre ledit appareil de prise de vues et un objet;

    un détecteur (8) du grandissement photographique pour détecter un grandissement photographique dudit appareil de prise de vues;

    un dispositif (11) de calcul de la quantité d'entraînement de correction pour calculer une quantité de déplacement d'une image et une quantité de décalage focal sur la base de déplacements respectifs dans les trois directions axiales, calculées par élimination desdites composantes d'accélération de la pesanteur à partir desdites accélérations respectives dans les trois directions axiales, d'angles de rotation respectifs autour des trois axes calculés à partir desdites vitesses angulaires respectives autour des trois axes, de la distance entre l'appareil de prise de vues et ledit objet, et dudit grandissement photographique, calculer une quantité d'entraînement d'une lentille de correction et/ou d'une surface de détection d'images de manière à annuler ladite quantité de déplacement de ladite image, et calculer une quantité d'entraînement d'une lentille de focalisation et/ou de ladite surface de détection d'images pour annuler ladite quantité de décalage focal; et

un dispositif d'entraînement de correction (12) pour entraîner ladite lentille de correction et/ou ladite lentille de focalisation et/ou ladite surface de détection d'images.

6. Appareil de prise de vues à stabilisation d'images selon la revendication 5, dans lequel ledit dispositif de détermination d'attitude (9) calcule ladite attitude initiale dudit appareil de prise de vues par rapport audit système de coordonnées statique à partir d'une direction d'accélération de la pesanteur dans ledit système de coordonnées de l'appareil de prise de vues, obtenue à partir desdites accélérations dans les trois directions axiales.

7. Appareil de prise de vues à stabilisation d'image comprenant :

un dispositif (1,2,3) de détection d'accélération pour détecter une accélération agissant sur ledit appareil de prise de vues dans trois directions;

un dispositif (4,5,6) de détection de vitesses angulaires pour détecter une pluralité de vitesses angulaires agissant sur ledit appareil de prise de vues autour desdits trois axes;

un dispositif de détermination d'attitude (9) pour calculer une matrice de transformation de coordonnées entre un système de coordonnées de l'appareil de prise de vues et un système de coordonnées statique à partir desdites vitesses angulaires et à partir desdites accélérations;

un dispositif (10) de calcul des composantes de l'accélération de la pesanteur pour calculer des composantes de l'accélération de la pesanteur dans ledit système de coordonnées de l'appareil de prise de vues moyennant l'utilisation de ladite matrice de transformation de coordonnées;

un dispositif (11) de calcul de la quantité d'entraînement de correction pour calculer des composantes d'accélération par élimination desdites composantes d'accélération de la pesanteur à partir de ladite accélération, et calculer une quantité de déplacement d'une image et d'une quantité de correction pour ledit déplacement de ladite image sur la base d'un déplacement calculé à partir desdites composantes d'accélération et d'un angle de rotation calculé à partir desdites vitesses angulaires; et

un dispositif (12) de correction de déplacement d'images pour corriger ledit déplacement de ladite image sur la base de ladite quantité de correction.

8. Procédé pour stabiliser une image dans un appareil de prise de vues, comprenant :

une étape de détection d'accélérations servant à détecter des accélérations respectives dans les trois directions X, Y et Z, agissant sur ledit appareil de prise de vues;

l'étape de détection de la vitesse angulaire servant à détecter des vitesses angulaires respectives autour desdits trois axes, agissant sur ledit appareil de prise de vues;

l'étape de détermination d'attitude consistant à calculer une matrice de transformation de coordonnées entre un système de coordonnées de l'appareil de prise de vues et un système de coordonnées statique à partir d'une attitude initiale dudit appareil de prise de vues par rapport audit système de coordonnées statique, et à partir desdites vitesses angulaires autour desdits trois axes;

une étape de calcul de composantes de l'accélération de pesanteur pour calculer des composantes d'accélération de pesanteur dans ledit système de coordonnées de l'appareil de prise de vues moyennant l'utilisation de ladite matrice de transformation de coordonnées;

l'étape de calcul de la quantité d'entraînement de correction consistant à calculer une quantité de déplacement d'une image sur la base de déplacements respectifs dans les directions des axes X et Y ou dans les trois directions axiales, calculées par élimination desdites composantes de l'accélération de la pesanteur à partir desdites accélérations respectives dans les directions des axes X et Y ou dans les trois directions axiales, d'angles de rotation respectifs autour des axes X et Y ou des trois axes calculés à partir desdites vitesses angulaires respectives autour des axes X et Y ou autour des trois axes, de la distance entre ledit appareil de prise de vues et un objet et d'un grandissement photographique dudit appareil de prise de vues, et calculer une quantité d'entraînement d'une lentille de correction et/ou d'une surface de détection d'images de manière à annuler ladite quantité de déplacement de ladite image; et

l'étape d'entraînement de correction servant à entraîner ladite lentille de correction et/ou ladite surface de détection d'images.

FIG. 1

# FIG. 2A

# FIG. 2B

# FIG. 3

FIG. 4A

FIG. 4B

ROTATION

TRANSLATION

FIG. 9

# FIG. 5

ACCELERATION DETECTOR X — 1

ACCELERATION DETECTOR Y — 2

ATTITUDE DETECTOR — 13

ATTITUDE DETERMINING DEVICE — 9

GRAVITATIONAL ACCELERATION COMPONENT CALCULATING DEVICE — 10

ANGULAR RATE DETECTOR X — 4

ANGULAR RATE DETECTOR Y — 5

ANGULAR RATE DETECTOR Z — 6

OBJECT DISTANCE MEASURING DEVICE — 7

PHOTOTAKING MAGNIFICATION DETECTOR — 8

INTEGRATION

INTEGRATION

CORRECTION DRIVE AMOUNT CALCULATING DEVICE — 11

CORRECTION DRIVE DEVICE — 12

EP 0 658 797 B1

## FIG. 6

Figure 6 is a block diagram. It includes the following labeled blocks:

- 1 — ACCELERATION DETECTOR X
- 2 — ACCELERATION DETECTOR Y
- 3 — ACCELERATION DETECTOR Z
- 4 — ANGULAR RATE DETECTOR X
- 5 — ANGULAR RATE DETECTOR Y
- 6 — ANGULAR RATE DETECTOR Z
- 7 — OBJECT DISTANCE MEASURING DEVICE
- 8 — PHOTOTAKING MAGNIFICATION DETECTOR
- 9 — ATTITUDE DETERMINING DEVICE
- 10 — GRAVITATIONAL ACCELERATION COMPONENT CALCULATING DEVICE
- 11 — CORRECTION DRIVE AMOUNT CALCULATING DEVICE
- 12 — CORRECTION DRIVE DEVICE
- INTEGRATION (multiple blocks)

## FIG. 7

```
┌──────────────────┐ ⌐23          ┌─────────────┐
│   ANGULAR RATE   │──────────────│ INTEGRATION │────────┐
│   DETECTOR X     │              │             │        │
└──────────────────┘              └─────────────┘        │
                                                          ▼
                                                  ┌──────────────┐ ⌐25     ┌─────────────┐ ⌐26
                                                  │  CORRECTION  │         │  CORRECTION │
                                                  │  DRIVE       │────────▶│  DRIVE      │
                                                  │  AMOUNT      │         │  DEVICE     │
┌──────────────────┐ ⌐24          ┌─────────────┐ │  CALCULATING │         └─────────────┘
│   ANGULAR RATE   │──────────────│ INTEGRATION │─│  DEVICE      │
│   DETECTOR Y     │              │             │ └──────────────┘
└──────────────────┘              └─────────────┘
```

## FIG. 8

```
┌──────────────────┐ ⌐27       ┌─────────────┐  ┌─────────────┐
│  ACCELERATION    │───────────│ INTEGRATION │──│ INTEGRATION │──┐
│  DETECTOR X      │           │             │  │             │  │
└──────────────────┘           └─────────────┘  └─────────────┘  │
┌──────────────────┐ ⌐28       ┌─────────────┐  ┌─────────────┐  │
│  ACCELERATION    │───────────│ INTEGRATION │──│ INTEGRATION │──┤
│  DETECTOR Y      │           │             │  │             │  │
└──────────────────┘           └─────────────┘  └─────────────┘  │     ┌──────────────┐ ⌐32      ┌─────────────┐ 33
                                                                 ├────▶│  CORRECTION  │          │  CORRECTION │
┌──────────────────┐ ⌐29       ┌─────────────┐                   │     │  DRIVE       │          │  DRIVE      │
│  ANGULAR RATE    │───────────│ INTEGRATION │───────────────────┤     │  AMOUNT      │─────────▶│  DEVICE     │
│  DETECTOR X      │           │             │                   │     │  CALCULATING │          └─────────────┘
└──────────────────┘           └─────────────┘                   │     │  DEVICE      │
┌──────────────────┐ ⌐30       ┌─────────────┐                   │     └──────────────┘
│  ANGULAR RATE    │───────────│ INTEGRATION │───────────────────┤
│  DETECTOR Y      │           │             │                   │
└──────────────────┘           └─────────────┘                   │
┌──────────────────┐ ⌐31                                         │
│ OBJECT DISTANCE  │─────────────────────────────────────────────┘
│ MEASURING DEVICE │
└──────────────────┘
```